# EUROPEAN PATENT SPECIFICATION

(11) **EP 1 237 085 B1**
(45) Date of publication and mention of the grant of the patent: **01.12.2004**
(21) Application number: 01301713.2
(22) Date of filing: 26.02.2001
(51) Int. Cl.: G06F 11/14

(54) **Memory management method for configuring a computer data storage medium to include a virtual disk drive**
Speicherverwaltungsverfahren zur Konfiguration eines Computer-speichermediums mit einer virtuellen Platteneinheit
Méthode de gestion de mémoire pour configurer une mémoire d'ordinateur avec une unité de disque virtuelle

(43) Date of publication of application: 04.09.2002
(73) Proprietor: Wu, Yu-Te, Chiayi City (TW)
(72) Inventor: Wu, Yu-Te, Chiayi City (TW)
(74) Representative: Moir, Michael Christopher

(56) References cited:
- EP-A- 0 319 147
- EP-A- 0 402 683
- WO-A-01/01251
- WO-A-01/06366
- GB-A- 2 332 962
- US-A- 5 089 958
- US-A- 5 247 660
- US-A- 5 325 519
- US-A- 5 987 565
- US-A- 6 016 536

## Description

The invention relates to a computer data storage medium and a memory management method therefor, more particularly to a memory management method in which a computer data storage medium is configured to include at least one virtual disk drive.

At present, partitioning schemes are available in the art to permit partitioning of a computer data storage medium, such as a hard disk, a floppy disk or a portable data storage device, into several system disk drives for storing system files therein, and a data disk drive to be commonly shared by the system disk drives, thereby resulting in efficient use of memory space. Moreover, back-up schemes are available in the art so that, when a system file is modified, the initial version of the system file is stored as a back-up file, while the modified version of the system file is stored as the new system file. Thus, when the new system file is corrupted, such as by a computer virus, portions of the new system file can still be recovered due to the presence of the back-up file.

A main drawback of the known back-up scheme resides in that a system file cannot be restored to its initial installed form once the system file has undergone numerous modifications.

A mirror scheme is also available in the art, wherein the contents of a master hard disk are copied into a slave hard disk so that, when the master hard disk is damaged, the contents of the master hard disk are still available due to the presence of the slave hard disk. However, the known mirror scheme does not provide protection against computer viruses since a computer virus written into the master hard disk is also copied into the slave hard disk.

Document US-A-6016536 discloses a memory management method for a hard disk drive of a computer system, said method teaching the partition of the drive in a system disk drive, a data disk drive and a system buffer area. The computer system can be operated in an unrestricted and a restricted mode. In the restricted mode, changes in the system files of the system disk drive are stored in the system buffer area instead of the system disk drive to maintain the system files in the system disk drive in their initial form. The addresses of the modified portions of the files are stored in a read/write table, said table being consulted each time a read/write operation in one of the system files is processed.

The object of the present invention is to provide a memory management method for configuring a computer data storage medium so as to dispense with the need to partition the same into system and data disk drives while providing adequate protection against computer viruses and permitting restoration of system files in the computer data storage medium to their initial form.

More specifically, the object of the present invention is to provide a memory management method for configuring a computer data storage medium to include a system disk drive and at least one virtual disk drive that appears as a file name in a file description area of the system disk drive and that shares free storage space of the computer data storage medium with the system disk drive to result in greater flexibility when the computer data storage medium is in use.

Another obj ect of the present invention is to provide a memory management method for configuring, reading and writing into a computer data storage medium.

These objects are solved in advantageous manner by applying the features laid down in the independent claims. Further enhancements are provided by the dependent Claims.

According to the present invention, a memory management method for a computer data storage medium comprises configuring the computer data storage medium to include a system disk drive that has a starting data region with a system drive description area and a starting data area for storing system files, and at least one virtual disk drive that appears as a file name in the system drive description area of the starting data region and that is not allocated with a predetermined amount of memory space.

Preferably, the systemdisk drive further has a system buffer file for storing user-modified portions of the system files residing in the starting data area, and a read/write record file for recording addresses of portions of the system files in the starting data area and corresponding to the user-modified portions stored in the systembuffer file. The systembuffer file appears as a file name in the system drive description area of the starting data region and is not allocated with a predetermined amount of memory space.

The memory management method further comprises selectively operating a computer in an unprotected mode, where storing of the system files in the starting data area and modifying of the system files in the starting data area by the computer are permitted, and a protected mode, where the user-modified portions of the system files in the starting data area are stored by the computer in the system buffer file instead of the starting data area to maintain the system files in the system disk drive in their initial form, and where the read/write record file is updated by the computer to record the addresses of the portions of the system files in the starting data area that correspond to the user-modified portions in the system buffer file.

Other features and advantages of the present invention will become apparent in the following detailed description of the preferred embodiment with reference to the accompanying drawings, of which:
Figure 1 is a block diagram illustrating a computer data storage medium configured by the preferred embodiment of a memory management method according to the present invention;
Figure 2 is a flow chart illustrating how the computer data storage medium of Figure 1 is configured in accordance with the preferred embodiment;
Figure 3 illustrates the relationship between a read/write record file and a system buffer file of a system disk drive of the computer data storage medium of Figure 1;
Figure 4 is a flow chart illustrating a write operation for the computer data storage medium of Figure 1 in accordance with the preferred embodiment; and
Figure 5 is a flow chart illustrating a read operation for the computer data storage medium of Figure 1 in accordance with the preferred embodiment.

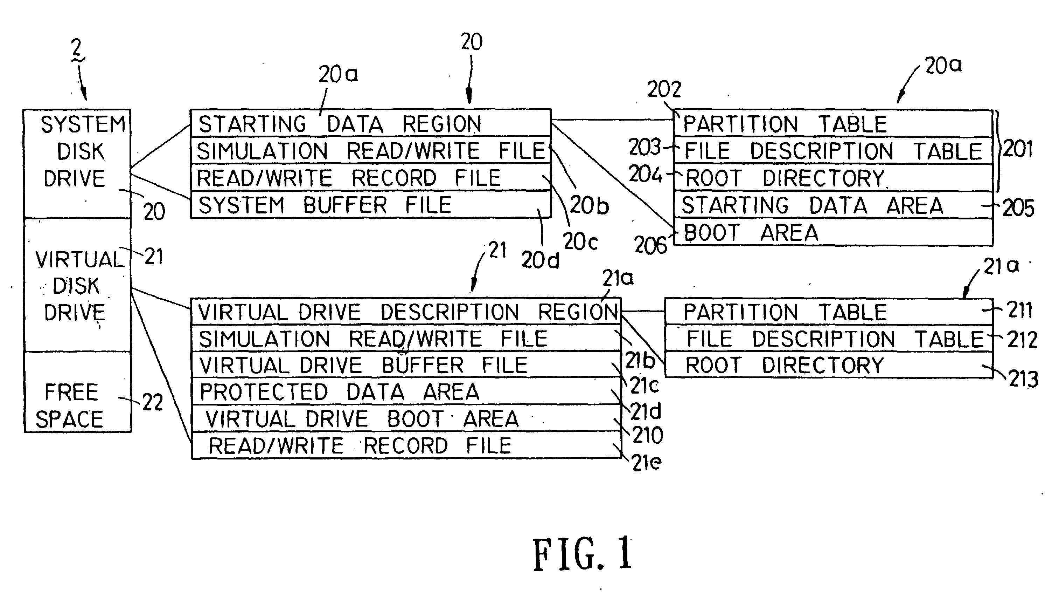

Referring to Figure 1, a computer data storage medium 2, such as a hard disk, a floppy disk or a portable data storage device, is configured by the preferred embodiment of a memory management method according to the present invention to include a system disk drive 20 and at least one virtual disk drive 21 (only one is shown).

The system disk drive 20 is configured to include a starting data region 20a, a simulation read/write file 20b, a read/write record file 20c, and a system buffer file 20d.

The starting data region 20a is in the form of a contiguous data block in the computer data storage medium 2, and is configured to include a system drive description area 201 for storing at least one of a partition table 202, a file description table 203 and a root directory 204. The file description table 203 is known as a file allocation table (or FAT) in a DOS or Windows operating environment, and is referred to under another name in other operating systems, such as UNIX. The starting data region 20a further includes a starting data area 205 for storing system files resident in the computer data storage medium 2 prior to configuring the latter in accordance with the memory management method of this invention. If the system disk drive 20 is bootable, the starting data area 205 can have a boot area 206 for storing an operating system, such as WIN 98, WIN 95, WIN 3.1, DOS 5.0, etc.

The simulation read/write file 20b is provided so that, when the user forces a computer to write into the system drive description area 201, such as a write command to the partition table 202, the computer can be enabled to execute a write emulation operation by writing into the simulation read/write file 20b instead of the system drive description area 201, thereby maintaining the integrity of information that is present in the system drive description area 201.

The system buffer file 20d is used to store new files for the system disk drive 20 and user-modified portions of the system files residing in the starting data region 20a. When data has yet to be stored in the system buffer file 20d, the system buffer file 20d only appears as a file name in the system drive description area 201, and does not occupy a predetermined allocated amount of memory space.

The read/write record file 20c is provided to record addresses of portions of the system files residing in the starting data region 20a and corresponding to the user-modified portions stored in the system buffer file 20d.

Each virtual disk drive 21 may be a bootable disk drive or a data disk drive . When data has yet to be stored in the virtual disk drive 21, the virtual disk drive 21 only appears as a file name in the system drive description area 201, and does not occupy a predetermined allocated amount of memory space . Each virtual disk drive 21 is configured to include a virtual drive description region 21a, a simulation read/write file 21b, and a virtual drive buffer file 21c.

The virtual drive description area 21a is used to store at least one of a virtual drive partition table 211, a virtual drive file description table 212 and a virtual drive root directory 213.

The simulation read/write file 21b is provided so that, when the user forces the computer to write into the virtual drive description area 21a, the computer can be enabled to perform a write emulation operation by writing into the simulation read/write file 21b instead of the virtual drive description area 21a, thereby maintaining the integrity of information that is present in the virtual drive description area 21a.

The virtual drive buffer file 21c can be used to store new files for the virtual disk drive 21. When data has yet to be stored in the virtual drive buffer file 21c, the virtual drive buffer file 21c only appears as a file name in the virtual drive description area 21a, and does not occupy a predetermined allocated amount of memory space.

The virtual disk drive 21 maybe configured to further include a protected data area 21d. In this case, the virtual drive buffer file 21c can be used to store user-modified portions of system files residing in the protected data area 21d, and a read/write record file 21e is provided to record addresses of portions of the system files residing in the protected data area 21d and corresponding to the user-modified portions stored in the virtual drive buffer file 21c.

If the virtual disk drive 21 is bootable, the protected data area 21d can include a virtual drive boot area 210 for storing a second operating system that is usually different from the one stored in the system disk drive 20.

The remaining free storage space 22 in the computer data storage medium 2 is available for use by the system buffer file 20d of the system disk drive 20, and the virtual drive buffer file 21c of each virtual disk drive 21.

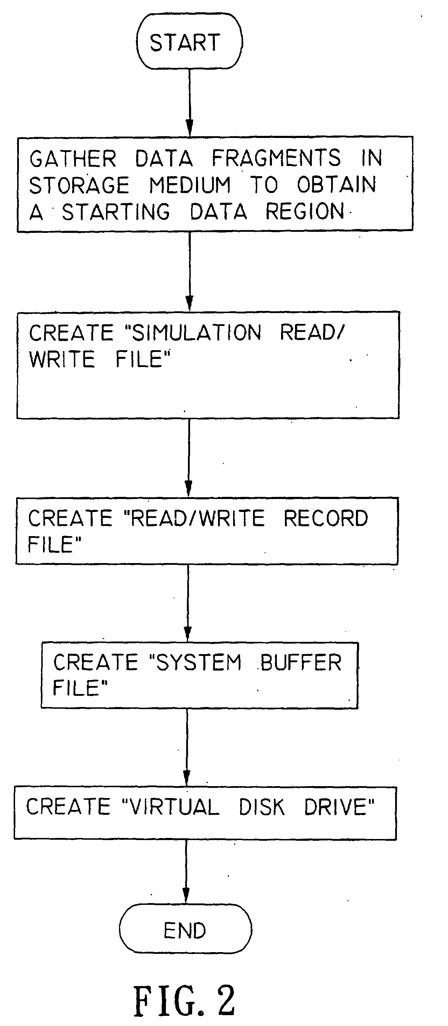

Figure 2 is a flow chart illustrating how the computer data storage medium 2 of Figure 1 is configured in accordance with the preferred embodiment of a memory management method according to the present invention. The memory management method is to be performed by a standard personal computer that incorporates the computer data storage medium 2. In the preferred embodiment, in order to enable the computer to perform the memory management method of this invention, a plug-in read only memory (ROM) card, in which the computer program for performing the memory management method resides, is mounted on an interface bus, such as an ISA bus, of the computer.

Once the ROM card has been installed on the interface bus, when power to the computer is turned on, the central processing unit of the computer performs a hardware configuration operation in connection with a BIOS memory, as is known in the art. In the prior art, control of the computer is taken over by an operating system after completion of the hardware configuration operation. However, in the memory management method of this embodiment, in view of the presence of the ROM card on the interface bus, the computer is controlled so as to give the user the option of configuring the computer data storage medium 2 before control of the computer is taken over by the operating system.

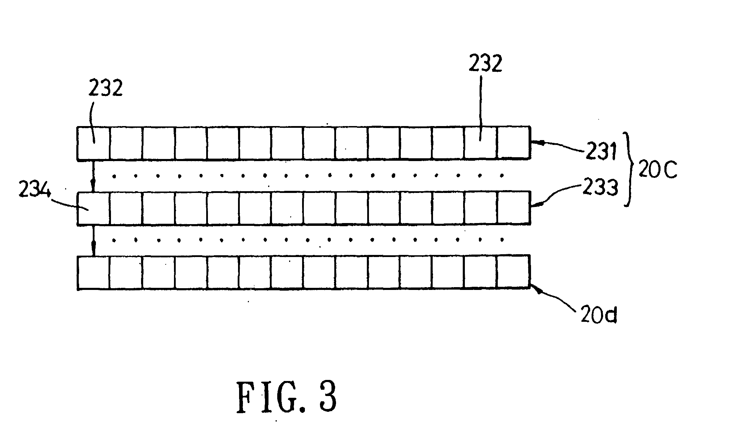

In the present invention, there is no need to partition the computer data storage medium 2 into system and data disk drives with allocated memory sizes. As shown in Figures 1 and 2, when configuring the computer data storage medium 2 in accordance with the memory management method of this invention, data fragments initially scattered throughout the computer data storage medium 2 are gathered to obtain the starting data region 20a that is in the form of a contiguous data block located in a starting segment of the computer data storage medium 2 and that includes the starting data area 205 for storing the system files, and the system drive description area 201. Thereafter, the simulation read/write file 20b, the read/write record file 20c and the system buffer file 20d are created to complete the system disk drive 20. As shown in Figure 3, the read/write record file 20c includes a sector table 231 and an index table 233. Each sector indicating unit 232 of the sector table 231 is a single bit that represents whether a corresponding physical sector (512 bytes or 0.5 kilobytes) of the computer data storage medium has been modified. For a 4-gigabyte computer data storage medium, the sector table 231 occupies approximately 1 megabyte of memory space. Each address recording unit 234 of the index table 233 is a double word for indexing 4 kilobytes of data. For a 4-gigabyte computer data storage medium, the index table 233 occupies approximately 4 megabytes of memory space. Thus, for a 4-gigabyte computer data storage medium, the read/write record file 20c occupies about 5 megabytes of memory space.

In the preferred embodiment, one storage unit of the system buffer file 20d is 4 kilobytes in size. Thus, even if only one byte was modified, this change is stored in the corresponding 4-kilobyte space of the computer data storage medium. Data search of the system buffer file 20d is done with the use of the read/write record file 20c. With the arrangement as such, the space allocated for the read/write record file 20c can be effectively minimized, and the adverse effect on the data searching efficiency of the computer due to the storage of back-up data can be reduced. Moreover, by virtue of the read/write record file 20c and the system buffer file 20d, system files can be frequently updated and restored to their initial form when desired.

Modified data in the system buffer file 20d need not follow the sector sequence of the original data in the computer data storage medium 2. Instead, the arrangement that is in use is the order of modification. For example, if the fifth physical sector of the computer data storage medium 2 is the first to be modified, the first address recording unit 234 of the index table 233 corresponding to the first sector indicating unit 232 of the sector table 231 of the read/write record file 20c will store a double word for "05" therein. The modified data for the fifth physical sector is stored in a storage unit in the system buffer file 20d corresponding to the first address recording unit 234 of the index table 233. If the fifty-eighth physical sector of the computer data storage medium is the next to be modified, the second address recording unit 234 of the index table 233 corresponding to the second sector indicating unit 232 of the sector table 231 of the read/write record file 20c will store a double word for "58" therein. The modified data for the fifty-eighth physical sector is stored in another storage unit in the system buffer file 20d corresponding to the second address recording unit 234 of the index table 233.

Referring again to Figures 1 and 2, upon configuring the system disk drive 20, the computer data storage medium 2 is configured to form at least one virtual disk drive 21. In view of the similarities between the system disk drive 20 and the virtual disk drive 21, configuring of the virtual disk drive 21 proceeds in generally the same manner as that for the system disk drive 20. However, the data-gathering step for configuring the system disk drive 20 is replaced by a program-loading step when configuring the virtual disk drive 21. The remaining steps are almost the same and will not be detailed further for the sake of brevity.

After configuring of the computer data storage medium 2 has been completed in accordance with the memory management method of this invention, the computer program of the ROM card enables the computer to give the user thereof the option of operating the computer in a disabled mode, an unrestricted mode, a restricted mode, an auto-restoring mode, and an updating mode.

In the disabled mode, system files can be stored and modified without making any record in the read/write record files 20c, 21e. Restoration of the system files to their initial form is not possible in this mode.

In the unrestricted mode, system files can be stored in the starting data area 205 of the system disk drive 20 and can be modified without making any record in the read/write record file 20c. However, writing into the other parts of the system disk drive 20 and the virtual diskdrive 21 is not permittedunderthismode tomaintain the integrity of information that is present therein. The unrestricted mode of operation is also available for storing and modifying the system files in the protected data area 21d of the virtual disk drive 21. In this situation, writing into the system disk drive 20 and the other parts of the virtual disk drive 21 is not permitted to maintain the integrity of information that is present therein.

In the restricted mode, user-modified portions of the system files in the starting data area 205 or the protected data area 21d are stored in the associated buffer files 20d, 21c to maintain the system files in the starting data area 205 or the protected data area 21d in their initial form. At this time, the associated read/write record file 20c, 21e is updated by the computer to record addresses of portions of the system files in the starting data area 205 or the protected data area 21d corresponding to the user-modified portions stored in the respective buffer file 20d, 21c therein.

In the auto-restoring mode, the read/write record file 20c or 21e and the associated buffer file 20d or 21c are cleared before control of the computer is taken over by the operating system. As such, the system files in the associated one of the starting data area 205 and the protected data area 21d are automatically restored to their initial form. Reading and writing of data in the computer data storage medium 2 then proceeds in a manner similar to that in the aforesaid restricted mode .

In the updating mode, the system files in the starting data area 205 or the protected data area 21d are updated with the user-modified portions in the associated one of the buffer files 20d, 21c, and the associated buffer file 20d, 21c and the associated read/write record file 20c, 21e are cleared before control of the computer is taken over by the operating system, thereby updating the system files in the starting data area 205 or the protected data area 21d. Reading and writing of data in the computer data storage medium 2 then proceeds in a manner similar to that in the aforesaid restricted mode.

The disabled mode and the unrestricted mode can be generally considered as belonging to an unprotected operating mode since data can be written into the starting data area 205 or the protected data area 21d during a write operation of the computer. The restricted mode, the auto-restoring mode and the updating mode can be generally considered as belonging to a protected operating mode since data is written into the buffer file 20d, 21c during a write operation of the computer.

Once the operating mode has been selected; the computer program of the ROM card enables booting of the computer using the operating system that resides in a selected one of the system disk drive 20 and the virtual disk drive 21.

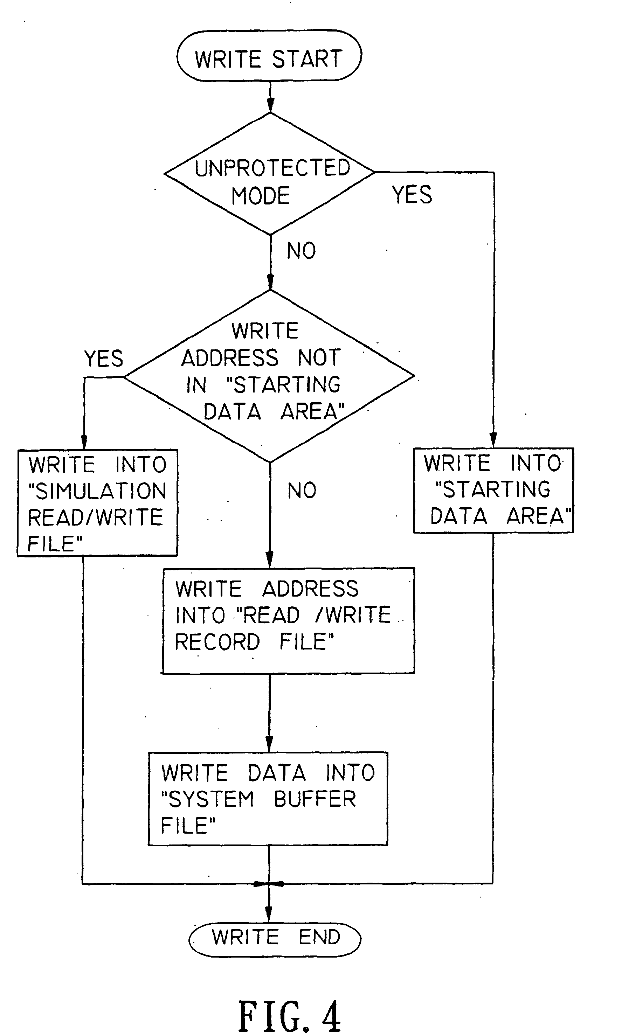

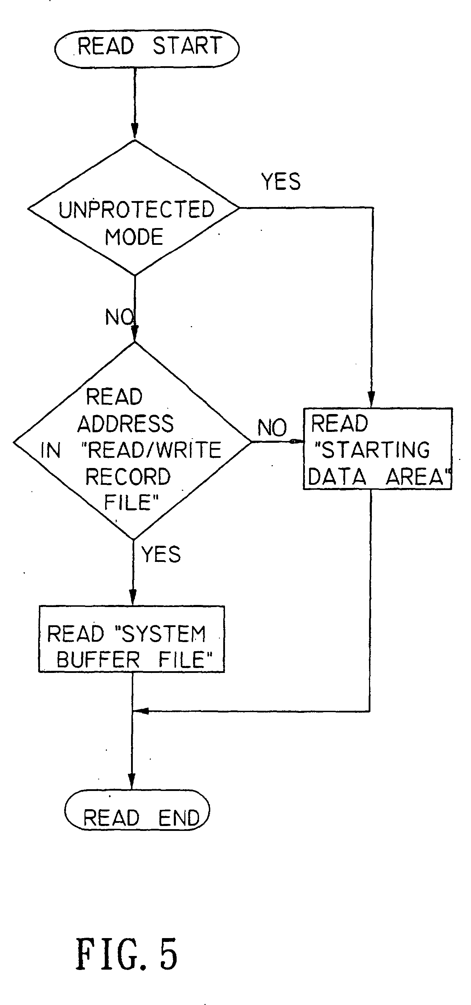

Figures 4 and 5 are flowcharts that respectively illustrate the write and read operations for the computer data storage medium 2 of Figure 1. In these flowcharts, it is assumed that the operating system that is in use resides in the boot area 200 of the starting data region 20a of the system disk drive 20. The write and read operations for the computer data storage medium 2 when the operating system that is in use resides in the virtual drive boot area 210 of the virtual disk drive 21 is generally analogous to the operations of Figures 4 and 5 and will not be detailed herein for the sake of brevity.

As shown in Figures 1 and 4, upon detection of a write command for writing into the computer data storage medium 2, the computer is enabled to write directly into the starting data area 205 when the computer operates in an unprotected operating mode for the system disk drive 20. When the computer operates in a protected operating mode for the system disk drive 20, it is first determined if the write address is not in the starting data area 205. If no, the write address is recorded in the read/write record file 20c, and the data is written into the system buffer file 20d, thereby maintaining the system files in the starting data area 205 in their initial form. If yes, the data is written into the simulation read/write file 20b, thereby preventing corruption of the system drive description area 201, the simulation read/write file 20b, the system buffer file 20d, the read/write record file 20c, and the virtual disk drive 21 by a computer virus.

Referring to Figure 5, upon detection of a read command for reading the computer data storage medium, the computer is enabled to read directly the starting data area 205 when the computer operates in an unprotected operating mode for the system disk drive 20. When the computer operates in a protected operating mode for the system disk drive 20, it is first determined if the read address is recorded in the read/write record file 20c. If no, the computer is enabled to read the starting data area 205. If yes, the computer is enabled to read the system buffer file 20d to determine the user-modified data corresponding to the read address.

Therefore, in the event that data in the system buffer file 20d is corrupted, operation of the computer in the auto-restoring mode will clear the read/write record file 20c and the system buffer file 20d and restore the computer data storage medium 2 to its initial uncorrupted state . Because the system buffer file 20d and the virtual disk drive 21 only appear as file names in the system drive description area 201, they do not occupy a predetermined allocated amount of space in the computer data storage medium 2 to result in enhanced flexibility when the latter is in use.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

A computer data storage medium (2) is configured by a memory management method to include a system disk drive (20) having a starting data region (20a) with a system drive description area (201) and a starting data area (205) for storing system files, and at least one virtual disk drive (21) that appears as a file name in the system drive description area (201) of the starting data region (20a) and that is not allocated with a predetermined amount of memory space.

## Claims

1. A memory management method for a computer disk drive (2), comprising the steps of
configuring the computer disk drive (2) to include a system disk drive (20) that has a starting data region (20a) with a system drive description area (201) and a starting data area (205) for storing system files, and at least one virtual disk drive (21) that appears as a file name in the system drive description area (201) of the starting data region (20a) and that is not allocated with a predetermined amount of memory space;
said system disk drive (20) further having a system buffer file (20d) for storing user-modified portions of the system files residing in the starting data area (205), and a read/write record file (20c) for recording addresses of portions of the system files in the starting data area (205) and corresponding to the user-modified portions stored in the system buffer file (20d), the system buffer file (20d) appearing as a file name in the system drive description area (201) of the starting data region (20a) and not being allocated with a predetermined amount of memory space.

2. The memory management method as claimed in Claim 1, further **characterized by** selectively operating a computer in an unprotected mode, where storing of the system files in the starting data area (205) and modifying of the system files in the starting data area (205) by the computer are permitted, and a protected mode, where the user-modified portions of the system files in the starting data area (205) are stored by the computer in the system buffer file (20d) instead of the starting data area (205) to maintain the system files in the system disk drive (20) in their initial form, and where the read/write record file (20c) is updated by the computer to record the addresses of the portions of the system files in the starting data area (205) that correspond to the user-modified portions in the system buffer file (20d)

3. The memory management method as claimed in Claim 2, further **characterized by** selectively operating the computer to perform a read operation of the computer disk drive medium (2), including the sub-steps of:
enabling the computer to read the starting data area (205) when the read address is in the starting data area (205) while the computer is operated in the unprotected mode;
enabling the computer to read the starting data area (205) when the read address is in the starting data area (205) and is not recorded in the read/write record file (20c) while the computer is operated in the protected mode; and
enabling the computer to read a portion of the system buffer file (20d) corresponding to the read address when the read address is in the starting data area (205) and is recorded in the read/write record file (20c) while the computer is operated in the protected mode.

4. The memory management method as claimed in Claim 2, further **characterized by** selectively operating the computer in an auto-restoring mode, where the computer clears the read/write record file (20c) and the system buffer file (20d).

5. The memory management method as claimed in Claim 2, further **characterized by** selectively operating a computer to perform a write operation of the computer disk drive (2), including the sub-steps of:
enabling the computer to write into the starting data area (205) when the write address is in the starting data area (205) while the computer is operated in the unprotected mode; and
enabling the computer to write into the system buffer file (20d) when the write address is in the starting data area (205) while the computer is operated in the protected mode, and to record the write address in the read/write record file (20c).

6. The memory management method as claimed in Claim 5, further **characterized in that** the user-modified portions are stored in the system buffer file (20d) as storage units, the read/write record file (20c) including
a sector table (231) that has a plurality of sector indicating units (232) to indicate whether a corresponding physical sector of the computer data storage medium (2) has been modified, and
an index table (233) that has a plurality of address recording units (234), each of which corresponds to one of the storage units in the system buffer file (20d) and stores the address of the portion of the system files in the starting data area (205) that corresponds to said one of the storage units in the system buffer file (20d)

7. The memory management method as claimed in Claim 5, further **characterized in that** the system disk drive (20) has a simulation read/write file (20b), the step of selectively operating the computer to perform the write operation of the computer data storage medium (2) further including the sub-step of enabling the computer to execute a write emulation operation, where writing is done in the simulation read/write file (20b) when the write address is not in the starting data area (205).

8. The memory management method as claimed in Claim 2, further **characterized by** the step of selectively operating the computer in an updating mode, where the system files in the starting data area (205) are updated with the user-modified portions in the system buffer file (20d).

9. The memory management method as claimed in Claim 1, **characterized in that** the starting data area (205) has a boot area (206) for storing an operating system therein.

10. The memory management method as claimed in Claim 1, **characterized in that** the system drive description area (201) has at least one of a partition table (202), a file description table (203) and a root directory (204) stored therein.

11. The memory management method as claimed in Claim 1, **characterized in that** the virtual disk drive (21) is configured to include a virtual drive description region (21a), a protected data area (21d) for storing system files, a virtual drive buffer file (21c) for storing user-modified portions of the system files residing in the protected data area (21d), and a read/write record file (21e) for recording addresses of portions of the system files in the protected data area (21d) and corresponding to the user-modified portions stored in the virtual drive buffer file (21c), the virtual drive buffer file (21c) appearing as a file name in the virtual drive description region (21a) and not being allocated with a predetermined amount of memory space.

12. The memory management method as claimed in Claim 11, further **characterized in that** the protected data area (21d) has a virtual drive boot area (210) for storing an operating system therein.

13. The memory management method as claimed in Claim 11, further **characterized in that** the virtual drive description region (21a) has at least one of a partition table (211), a file description table (212) and a root directory (213) stored therein.

14. The memory management method as claimed in Claim 1, **characterized in that** the step of configuring the computer data storage medium (2) includes the sub-step of gathering data fragments initially scattered throughout the computer data storage medium (2) to obtain the starting data region (20a) that is in the form of a contiguous data block located in a starting segment of the computer data storage medium (2).

15. A computer disk drive (2) configured by a memory management method according to any one of Claims 1 to 14, comprising a system disk drive (20) that is configured to include a starting data region (20a) having a system drive description area (201) and a starting data area (205) for storing system files, and at least one virtual disk drive (21) that appears as a file name in said system drive description area (201) of said starting data region (20a) and that is not allocated with a predetermined amount of memory space;
said system disk drive (20) being further configured to include a system buffer file (20d) for storing user-modified portions of the system files residing in said starting data area (205), and a read/write record file (20c) for recording addresses of portions of the system files in said starting data area (205) and corresponding to the user-modified portions stored in said system buffer file (20d), said system buffer file (20d) appearing as a file name in said system drive description area (201) of said starting data region (20a) and not being allocated with a predetermined amount of memory space.

16. The computer disk drive (2) as claimed in Claim 15, further **characterized in that** the user-modified portions are stored in said system buffer file (20d) as storage units, said read/write record file (20c) including
a sector table (231) that has a plurality of sector indicating units (232) to indicate whether a corresponding physical sector of the computer data storage medium (2) has been modified, and
an index table (233) that has a plurality of address recording units (234), each of which corresponds to one of the storage units in said system buffer file (20d) and stores the address of the portion of the system files in said starting data area (205) that corresponds to said one of the storage units in said system buffer file (20d).

17. The computer disk drive (2) as claimed in Claim 15, further **characterized by** free storage space (22) available for use by said virtual disk drive (21) and said system buffer file (20d).

18. The computer disk drive (2) as claimed in Claim 15, **characterized in that** said system disk drive (20) is further configured to include a simulation read/write file (20b) to permit execution of a write emulation operation, where in case of forced writing into said system drive description area (201), writing is done in said simulation read/write file (20b) instead of said system drive description area (201) to maintain integrity of information present in said system drive description area (201).

19. The computer disk drive (2) as claimed in Claim 15, **characterized in that** said starting data area (205) has a boot area (206) for storing an operating system therein.

20. The computer disk drive (2) as claimed in Claim 15, **characterized in that** said system drive description area (201) has at least one of a partition table (202), a file description table (203) and a root directory (204) stored therein.

21. The computer disk drive (2) as claimed in Claim 15, **characterized in that** said virtual disk drive (21) is configured to include a virtual drive description region (21a), a protected data area (21d) for storing system files, a virtual drive buffer file (21c) for storing user-modified portions of the system files residing in said protected data area (21d), and a read/write record file (21e) for recording addresses of portions of the system files in said protected data area (21d) and corresponding to the user-modified portions stored in said virtual drive buffer file (21c), said virtual drive buffer file (21c) appearing as a file name in said virtual drive description region (21a) and not being allocated with a predetermined amount of memory space.

22. The computer disk drive (2) as claimed in Claim 21, further **characterized by** free storage space (22) available for use by said virtual drive buffer file (21c) and said system buffer file (20d).

23. The computer disk drive (2) as claimed in Claim 21, further **characterized in that** said virtual disk drive (21) is configured to include a simulation read/write file (21b) to permit execution of a write emulation operation, where in case of forced writing into said virtual drive description region (21a), writing is done in said simulation read/write file (21b) instead of said virtual drive description region (21a) to maintain integrity of information present in said virtual drive description region (21a).

24. The computer disk drive (2) as claimed in Claim 21, further **characterized in that** said protected data area (21d) has a virtual drive boot area (210) for storing an operating system therein.

25. The computer disk drive (2) as claimed in Claim 21, further **characterized in that** said virtual drive description region (21a) has at least one of a partition table (211), a file description table (212) and a root directory (213) stored therein.

## Patentansprüche

1. Speichermanagemeniverfahren für ein Computerplattenlaufwerk, das die folgenden Schritte umfasst:
das Computerplattenlaufwerk (2) wird konfiguriert, um ein Systemplattenlaufwerk (20), das einen Startdatenbereich (20a) mit einem Systemlaufwerk-Beschreibungsbereich (201) und einem Startdatenbereich (205) zum Speichern von Systemdateien hat, und wenigstens ein virtuelles Plattenlaufwerk (21), das als ein Dateiname in dem Systemlaufwerk-Beschreibungsbereich (201) des Startdatenbereichs (20a) erscheint und dem nicht ein vorbestimmten Umfang eines Speicherplatzes bzw. einer Speicherkapazität zugewiesen ist, zu enthalten;
wobei das Systemplattenlaufwerk (20) weiter eine Systempufferdatei (20d) hat, um benutzermodifizierte Abschnitte der Systemdateien zu speichern, die in dem Startdatenbereich (205) sich befinden, und eine Lese/Schreib-Aufzeichnungsdatei (20c) hat, um Adressen von Abschnitten der Systemdateien in dem Startdatenbereich (205) aufzuzeichnen und zwar entsprechend den benutzermodifizierten Abschnitten, die in der Systempufferdatei (20d) gespeichert sind, wobei die Systempufferdatei (20d) als ein Dateiname in dem Systemlaufwerk/Beschreibungsbereich (201) des Startdatenbereichs (20a) erscheint und ihr nicht ein vorbestimmter Umfang an Speicherkapazität zugewiesen ist.

2. Speichermanagementverfahren, wie im Anspruch 1 beansprucht, das weiter **dadurch gekennzeichnet ist, dass** ein Computer in einem ungeschützten Modus, wo ein Speichern der Systemdateien in dem Startdatenbereich (205) und ein Modifizieren der Systemdateien in dem Startdatenbereich (205) durch den Computer erlaubt sind, und einem geschützten Modus, wo die benutzermodifizierten Abschnitte der Systemdateien in dem Startdatenbereich (205) von dem Computer in der Systempufferdatei (20d) anstatt dem Startdatenbereich (205) gespeichert werden, um die Systemdateien in dem Systemplattenlaufwerk (20) in ihrer anfänglichen Form aufrecht zu erhalten, und wo die Lese/Schreib-Aufzeichnungsdatei (20c) von dem Computer aktualisiert wird, um die Adressen der Abschnitte der Systemdateien in dem Startdatenbereich (205) aufzuzeichnen, die den benutzermodifizierten Abschnitten in der Systempufferdatei (20d) entsprechen, selektiv betrieben wird.

3. Speichermanagementverfahren, wie im Anspruch 2 beansprucht, das weiter **dadurch gekennzeichnet ist, dass** der Computer selektiv betrieben wird, um eine Leseoperation des Computerplattenlaufwerks (2) durchzuführen, und das die folgenden Unterschritte enthält:
der Computer wird freigegeben, um den Startdatenbereich (205) zu lesen, wenn die Leseadresse im dem Startdatenbereich (205) ist, während der Computer in dem ungeschützten Modus betrieben wird;
der Computer wird freigegeben, um den Startdatenbereich (205) zu lesen, wenn die Leseadresse in dem Startdatenbereich (205) ist und nicht in der Lese/Schreib-Aufzeichungsdatei (20c) gespeichert wird, während der Computer in dem geschützten Modus betrieben wird; und
der Computer wird freigegeben, um einen Abschnitt der Systempufferdatei (20d) zu lesen, der der Leseadresse entspricht, wenn die Leseadresse in dem Startdatenbereich (205) ist und in der Lese/Schreib-Aufzeichnungsdatei (20c) aufgezeichnet wird bzw. ist, während der Computer in dem geschützten Modus betrieben wird.

4. Speichermanagmentverfahren, wie im Anspruch 2 beansprucht, das weiter **dadurch gekennzeichnet ist, dass** der Computer in einem Autowiederherstellungsmodus selektiv betrieben wird, wo der Computer die Lese/Schreib-Aufzeichnungsdatei (20c) und die Systempufferdatei (20d) löscht.

5. Speichermanagementverfahren, wie im Anspruch 2 beansprucht, weiter **dadurch gekennzeichnet, dass** ein Computer selektiv betrieben wird, um eine Schreiboperation des Computerplattenlaufwerks (2) durchzuführen, und das weiter die folgenden Unterschritte enthält:
der Computer wird freigegeben, um in dem Startdatenbereich (205) zu schreiben, wenn die Schreibadresse in dem Startdatenbereich (205) ist, während der Computer in dem oben geschützten Modus betrieben wird; und
der Computer wird freigegeben, um in die Systempufferdatei (20d) zu schreiben, wenn die Schreibadresse in dem Startdatenbereich (205) ist, während der Computer in dem geschützten Modus betrieben wird, und um die Schreibadresse in der Lese/Schreib-Aufzeichnungsdatei (20c) aufzuzeichnen.

6. Speichermanagementverfahren, wie im Anspruch 5 beansprucht, weiter **dadurch gekennzeichnet, dass** die benutzermodifizierten Abschnitte in der Systempufferdatei (20d) als Speichereinheiten gespeichert werden, wobei die Lese/Schreib-Aufzeichnungsdatei (20c) Folgendes enthält:
eine Sektortabelle (231) die eine Vielzahl von Sektoranzeigeeinheiten (232) hat, um anzuzeigen, ob ein entsprechender physikalischer Sektor des Computerdaten-Speichermediums (2) modifiziert worden ist, und
eine Indextabelle (233), die eine Vielzahl von Adressenaufzeichnungseinheiten (234) hat, wobei jede davon einer der Speichereinheiten in der Systempufferdatei (20d) entspricht, und die Adresse des Abschnitts der Systemdateien in dem Startdatenbereich (205) speichert, der dem einen der Speichereinheiten in der Systempufferdatei (20d) entspricht.

7. Speichermanagementverfahren wie im Anspruch 5 beansprucht, das weiter **dadurch gekennzeichnet ist, dass** das Systemplattenlaufwerk (20) eine Simulations-Lese/Schreib-Datei (20b) hat, wobei der Schritt des selektiven Betreibens des Computers, um die Schreiboperation des Computerdaten-Speichermediums (2) durchzuführen, weiter den Unterschritt enthält, wonach der Computer freigegeben wird, um eine Schreibemulationsoperation auszuführen, wobei ein Schreiben in der Simulations-Lese/Schreib-Datei (20b) durchgeführt wird, wenn die Schreibadresse nicht in dem Startdatenbereich (205) ist.

8. Speichermanagementverfahren, wie in Anspruch 2 beansprucht, das weiter durch den Schritt gekennzeichnet ist, wonach der Computer in einem Aktualisierungsmodus selektiv betrieben wird, wobei die Systemdateien in dem Startdatenbereich (205) mit dem benutzermodifizierten Abschnitten in der Systempufferdatei (20d) aktualisiert wird.

9. Speichermanagementverfahren, wie in Anspruch 1 beansprucht, **dadurch gekennzeichnet, dass** der Startdatenbereich (205) einen Bootbereich bzw. Urladebereich (206) hat, um ein Betriebssystem darin zu speichern.

10. Speichermanagementverfahren, wie in Anspruch 1 beansprucht, **dadurch gekennzeichnet, dass** der Systemlaufwerk-Beschreibungsbereich (201) wenigstens eines der folgenden hat:
eine Partitionstabelle (202), eine Dateibeschreibungstabelle (203) und ein Hauptverzeichnis (204), die bzw. das darin gespeichert ist bzw. sind.

11. Speichermanagementverfahren, wie in Anspruch 1 beansprucht, **dadurch gekennzeichnet, dass** das virtuelle Plattenlaufwerk (21) konfiguriert ist, um einen virtuellen Laufwerkbeschreibungsbereich (21a), einen geschützten Datenbereich (21d) zum Speichern von Systemdateien, eine virtuelle Laufwerkpufferdatei (21c) zum Speichern benutzermodifizierter Abschnitte der Systemdateien, die in dem geschützten Datenbereich (21d) sich befinden, und eine Lese/Schreib-Aufzeichnungsdatei (21e) zum Aufzeichnen von Adressabschnitten der Systemdateien in dem geschützten Datenbereich (21 d), und zwar entsprechend den benutzermodifizierten Abschnitten, die in der virtuellen Laufwerkpufferdatei (21c) gespeichert sind, zu enthalten, wobei die virtuelle Laufwerkpufferdatei (21 c) als ein Dateiname in dem virtuellen Laufwerkbeschreibungsbereich (21a) erscheint und ihr nicht ein vorbestimmter Umfang an Speicherkapazität zugewiesen ist.

12. Speichermanagementverfahren, wie im Anspruch 11 beansprucht, das weiter **dadurch gekennzeichnet** ist, das der geschützte Datenbereich (21d) einen virtuellen Laufwerkurladebereich (210a) hat, um ein Betriebssystem darin zu speichern.

13. Speichermanagementverfahren, wie im Anspruch 11 beansprucht, weiter **dadurch gekennzeichnet, dass** der virtuelle Laufwerkbeschreibungsbereich (21a) wenigstens eines der folgenden enthält: eine Partitionstabelle (211), eine Datenbeschreibungstabelle (212) und ein Hauptverzeichnis (213), die bzw. das darin gespeichert ist bzw. sind.

14. Speichermanagementverfahren, wie im Anspruch 1 beansprucht, **dadurch gekennzeichnet, dass** der Schritt des Konfigurierens des Computerdaten-Speichermediums (2) den Unterschritt des Sammelns von Datenfragmenten enthält, die anfänglich über das gesamte Computerdaten-Speichermedium (2) verstreut sind, um den Startdatenbereich (20a) zu erhalten, der in der Gestalt eines angrenzenden Datenblocks ist, der in einem Startsegment des Computerdaten-Speichermediums (2) sich befindet.

15. Computerplattenlaufwerk (2), das durch ein Speichermanagementverfahren gemäß einem der Ansprüche 1 bis 14 konfiguriert ist und ein Systemplattenlaufwerk (20) umfasst, das konfiguriert ist, um einen Startdatenbereich (20a) zu enthalten, der einen Systemlaufwerk-Beschreibungsbereich (201) und einen Startdatenbereich (205) zum Speichern von Systemdateien hat, und wenigstens ein virtuelles Plattenlaufwerk (21) umfasst, das als ein Dateiname in dem Systemlaufwerk-Beschreibungsbereich (201) des Startdatenbereichs (20a) erscheint und dem nicht ein vorbestimmter Umfang an Speicherkapazität zugewiesen ist;
wobei das Systemplattenlaufwerk (20) weiter konfiguriert ist, um eine Systempufferdatei (20d) zum Speichern benutzermodifizierter Abschnitte der Systemdateien zu enthalten, die sich in dem Startdatenbereich (205) befinden, und eine Lese/Schreib-Aufzeichnungsdatei (20c) zum Aufzeichnen von Adressen von Abschnitten der Systemdateien in dem Startdatenbereich (205) und zwar entsprechend den benutzermodifizierten Abschnitten, die in der Systempufferdatei (20d) gespeichert sind, zu enthalten, wobei die Systempufferdatei (20d) als ein Dateiname in dem Systemlaufwerk-Beschreibungsbereich (201) des Startdatenbereichs (20a) erscheint und ihr nicht ein vorbestimmter Umfang an Speicherkapazität zugewiesen ist.

16. Computerplattenlaufwerk (2) wie in Anspruch 15 beansprucht, das weiter **dadurch gekennzeichnet ist, dass** benutzermodifizierte Abschnitte in der Systempufferdatei (20d) als Speichereinheiten gespeichert sind, wobei die Lese/Schreib-Aufzeichnungsdatei (20c) Folgendes enthält:
eine Sektortabelle (231), die eine Vielzahl von sektoranzeigenden Einheiten (232) hat, um anzuzeigen, ob ein entsprechender physikalischer Sektor des Computerdaten-Speichermediums (2) modifiziert worden ist, und
eine Indextabelle (233), die eine Vielzahl von Adressenaufzeichnungseinheiten (234) hat, wobei jede einer der Speichereinheiten in der Systempufferdatei (20d) entspricht und die Adresse des Abschnitts der Systemdateien in dem Startdatenbereich (205) speichert, die der einen der Speichereinheiten in der Systempufferdatei (20d) entspricht.

17. Computerplattenlaufwerk (2), wie im Anspruch 15 beansprucht, das weiter durch einen freien Speicherraum bzw. eine freie Speicherkapazität (22) gekennzeichnet ist, die zur Verwendung durch ein virtuelles Plattenlaufwerk (21) und die Systempufferdatei (20d) verfügbar ist.

18. Computerplattenlaufwerk (2), wie im Anspruch 15 beansprucht, **dadurch gekennzeichnet, dass** das Systemplattenlaufwerk (20) weiter konfiguriert ist, um eine Simulations-Lese/Schreib-Datei (20b) zu enthalten, um eine Ausführung einer Schreibemulationsoperation zu erlauben, wobei im Falle eines erzwungenen Schreibens in den Systemlaufwerk-Beschreibungsbereich (201) ein Schreiben in die Simulation-Lese/Schreib-Datei (20b) anstatt den Systemlaufwerk-Beschreibungsbereich (201) durchgeführt wird; um eine Integrität der Information aufrecht zu halten, die in dem Systemlaufwerk-Beschreibungsbereich (201) vorhanden ist.

19. Computerplattenlaufwerk (2), wie in Anspruch 15 beansprucht, **dadurch gekennzeichnet, dass** der Startdatenbereich (205) einen Urladebereich (206) zum Speichern eines Betriebssystems darin hat.

20. Computerplattenlaufwerk (2), wie in Anspruch 15 beansprucht, **dadurch gekennzeichnet, dass** der Systemplatten-Beschreibungsbereich (201) wenigstens eines der folgende hat: eine Partitionstabelle (202), eine Dateibeschreibungstabelle (203) und ein Hauptverzeichnis (204), die bzw. das darin gespeichert ist bzw. sind.

21. Computerplattenlaufwerk (2), wie in Anspruch 15 beansprucht, **dadurch gekennzeichnet, dass** das virtuelle Plattenlaufwerk (21) konfiguriert ist, um einen virtuellen Plattenbeschreibungsbereich (21a), einen geschützten Datenbereich (21d) zum Speichern von Systemdateien, eine virtuelle Laufwerkpufferdatei (21c) zum Speichern benutzermodifizierter Abschnitte bzw. Teile der Systemdateien, die in dem geschützten Datenbereich (21d) sich befinden, und eine Lese/Schreib-Aufzeichnungsdatei (21e) zum Aufzeichnen von Adressabschnitten der Systemdateien in dem geschützten Datenbereich (21d) und zwar entsprechend den benutzermodifizierten Abschnitten, die in der virtuellen Laufwerkpufferdatei (21c) gespeichert sind, zu enthalten, wobei die virtuelle Laufwerkpufferdatei (21c) als ein Dateiname in dem virtuellen Laufwerkbeschreibungsbereich (21a) erscheint und ihr nicht ein vorbestimmter Umfang an Speicherkapazität zugewiesen ist.

22. Computerplattenlaufwerk (2) wie in Anspruch 21 beansprucht, das weiter durch eine freie Speicherkapazität (22) gekennzeichnet ist, die zur Verwendung durch die virtuelle Laufwerkpufferdatei (21c) und die Systempufferdatei (20d) verfügbar ist.

23. Computerplattenlaufwerk (2), wie in Anspruch 21 beansprucht, weiter **dadurch gekennzeichnet, dass** das virtuelle Plattenlaufwerk (21) konfiguriert ist, um eine Simulations-Lese/Schreib-Datei (21b) zu enthalten, um eine Ausführung einer Schreibemolationsoperation zu erlauben, wobei im Fall eines erzwungenen Schreibens in den virtuellen Laufwerkbeschreibungsbereich (21a) ein Schreiben in die Simulations-Lese/Schreib-Datei (21b) anstatt den virtuellen Laufwerkbeschreibungsbereichs (21a) durchgeführt wird, um eine Integrität der Information aufrechtzuerhalten, die in dem virtuellen Laufwerkbeschreibungsbereich (21a) vorhanden ist.

24. Computerplattenlaufwerk (2), wie in Anspruch 21 beansprucht, weiter **dadurch gekennzeichnet, dass** der geschützte Datenbereich (21d) einen virtuellen Laufwerkurladebereich (210) hat, um ein Betriebssystem darin zu speichern.

25. Computerplattenlaufwerk (2), wie in Anspruch 21 beansprucht, weiter **dadurch gekennzeichnet, dass** der virtuelle Laufwerkbeschreibungsbereich (21 a) wenigstens eines der Folgenden hat: eine Partitionstabelle (211), eine Dateibeschreibungstabelle (212) und ein Hauptverzeichnis (213), das bzw. die darin gespeichert ist bzw. sind.

## Revendications

1. Procédé de gestion de mémoire pour une unité de disque d'ordinateur (2), comprenant les étapes consistant à :
configurer l'unité de disque d'ordinateur (2) pour inclure une unité de disque système (20) qui a une région de données de démarrage (20a) avec une zone de description d'unité système (201) et une zone de données de démarrage (205) pour stocker des fichiers système, et au moins une unité de disque virtuelle (21) qui apparaît comme un nom de fichier dans la zone de description d'unité système (201) de la région de données de démarrage (20a) et à laquelle n'est pas allouée une quantité prédéterminée d'espace mémoire ;
ladite unité de disque système (20) ayant en outre un fichier tampon système (20d) pour stocker les parties, modifiées par l'utilisateur, des fichiers système résidant dans la zone de données de démarrage (205), et un fichier d'enregistrement de lecture/écriture (20c) pour enregistrer des adresses de parties des fichiers système dans la zone de données de démarrage (205) et correspondant aux parties modifiées par l'utilisateur stockées dans le fichier tampon système (20d), le fichier tampon système (20d) apparaissant comme un nom de fichier dans la zone de description d'unité système (201) de la région de données de démarrage (20a) et une quantité prédéterminée d'espace mémoire ne lui étant pas alloué.

2. Procédé de gestion de mémoire selon la revendication 1, **caractérisé en outre par** un fonctionnement sélectif d'un ordinateur dans un mode non protégé, où un stockage des fichiers système dans la zone de données de démarrage (205) et une modification des fichiers système dans la zone de données de démarrage (205) par l'ordinateur sont autorisés, et un mode protégé, où les parties modifiées par l'utilisateur des fichiers système dans la zone de données de démarrage (205) sont stockées par l'ordinateur dans le fichier tampon système (20d) au lieu de la zone de données de démarrage (205) pour maintenir les fichiers système dans l'unité de disque système (20) dans leur forme initiale, et où le fichier d'enregistrement de lecture/écriture (20c) est mis à jour par l'ordinateur pour enregistrer les adresses des parties des fichiers système dans la zone de données de démarrage (205) qui correspondent aux parties modifiées par l'utilisateur dans le fichier tampon système (20d).

3. Procédé de gestion de mémoire selon la revendication 2, **caractérisé en outre par** un fonctionnement sélectif de l'ordinateur pour exécuter une opération de lecture de l'unité de disque d'ordinateur (2), comprenant les sous-étapes consistant à :
permettre à l'ordinateur de lire la zone de données de démarrage (205) quand l'adresse lue est dans la zone de données de démarrage (205) tandis que l'ordinateur est en fonctionnement en mode non protégé ;
permettre à l'ordinateur de lire la zone de données de démarrage (205) quand l'adresse lue est dans la zone de données de démarrage (205) et n'est pas enregistrée dans le fichier d'enregistrement de lecture/écriture (20c) tandis que l'ordinateur est en fonctionnement en mode protégé ; et
permettre à l'ordinateur de lire une partie du fichier tampon système (20d) correspondant à l'adresse lue quand l'adresse lue est dans la zone de données de démarrage (205) et est enregistrée dans le fichier d'enregistrement de lecture/écriture tandis que l'ordinateur est en fonctionnement en mode protégé.

4. Procédé de gestion de mémoire selon la revendication 2, **caractérisé en outre par** un fonctionnement sélectif de l'ordinateur dans un mode d'auto-restauration, où l'ordinateur efface le fichier d'enregistrement de lecture/écriture (20c) et le fichier tampon système (20d).

5. Procédé de gestion de mémoire selon la revendication 2, **caractérisé en outre par** un fonctionnement sélectif d'un ordinateur pour exécuter une opération d'écriture de l'unité de disque d'ordinateur (2), comprenant les sous-étapes consistant à :
permettre à l'ordinateur d'écrire dans la zone de données de démarrage (205) quand l'adresse d'écriture est dans la zone de données de démarrage (205) tandis que l'ordinateur est en fonctionnement en mode non protégé ; et
permettre à l'ordinateur d'écrire dans le fichier tampon système (20d) quand l'adresse d'écriture est dans la zone de données de démarrage (205) tandis que l'ordinateur est utilisé en mode protégé, et d'enregistrer l'adresse d'écriture dans le fichier d'enregistrement de lecture/écriture (20c).

6. Procédé de gestion de mémoire selon la revendication 5, **caractérisé en outre en ce que** les parties modifiées par l'utilisateur sont stockées dans le fichier tampon système (20d) en tant qu'unités de stockage, le fichier d'enregistrement de lecture/écriture (20c) comprenant
une table de secteurs (231) qui a une pluralité d'unités indicatrices de secteurs (232) pour indiquer si un secteur physique correspondant du support de stockage de données informatiques (2) a été modifié, et
une table d'index (233) qui a une pluralité d'unités d'enregistrement d'adresses (234), dont chacune correspond à une des unités de stockage dans le fichier tampon système (20d) et stocke l'adresse de la partie des fichiers système dans la zone de données de démarrage (205) qui correspond à ladite une des unités de stockage dans le fichier tampon système (20d).

7. Procédé de gestion de mémoire selon la revendication 5, **caractérisé en outre en ce que** l'unité de disque système (20) a un fichier de simulation de lecture/écriture (20b), l'étape de fonctionnement sélectif de l'ordinateur pour exécuter l'opération d'écriture du support de stockage de données informatiques (2) comprenant en outre la sous-étape consistant à permettre à l'ordinateur d'exécuter une opération d'émulation d'écriture, où l'écriture est faite dans le fichier de simulation de lecture/écriture (20b) quand l'adresse d'écriture n'est pas dans la zone de données de démarrage (205).

8. Procédé de gestion de mémoire selon la revendication 2, **caractérisé en outre par** l'étape consistant à faire fonctionner sélectivement l'ordinateur dans un mode de mise à jour, où les fichiers système dans la zone de données de démarrage (205) sont mis à jour avec les parties modifiées par l'utilisateur dans le fichier tampon système (20d).

9. Procédé de gestion de mémoire selon la revendication 1, **caractérisé en ce que** la zone de données de démarrage (205) a une zone d'initialisation (206) pour y stocker un système d'exploitation.

10. Procédé de gestion de la mémoire selon la revendication 1, **caractérisé en ce que** la zone de description d'unité système (201) a au moins un(e) d'une table de partition (202), d'une table de description de fichier (203) et d'un répertoire racine (204) qui y est stocké(e).

11. Procédé de gestion de mémoire selon la revendication 1, **caractérisé en ce que** l'unité de disque virtuelle (21) est configurée pour comprendre une région de description d'unité virtuelle (21a), une zone de données protégées (21d) pour stocker des fichiers système, un fichier tampon d'unité virtuelle (21c) pour stocker des parties modifiées par l'utilisateur des fichiers système résidant dans la zone de données protégées (21d), et un fichier d'enregistrement de lecture/écriture (21e) pour enregistrer des adresses des parties des fichiers système dans la zone de données protégées (21d) et correspondant aux parties modifiées par l'utilisateur stockées dans le fichier tampon d'unité virtuelle (21c), le fichier tampon d'unité virtuelle (21c) apparaissant comme un nom de fichier dans la région de description d'unité virtuelle (21a) et une quantité prédéterminée d'espace mémoire ne lui étant pas allouée.

12. Procédé de gestion de mémoire selon la revendication 11, **caractérisé en outre en ce que** la zone de données protégées (21d) a une zone d'initialisation d'unité virtuelle (210) pour stocker un système d'exploitation.

13. Procédé de gestion de mémoire selon la revendication 11, **caractérisé en outre en ce que** la région de description d'unité virtuelle (21a) a au moins un(e) d'une table de partition (211), d'une table de description de fichier (212) et d'un répertoire racine (213) qui y est stocké(e).

14. Procédé de gestion de la mémoire selon la revendication 1, **caractérisé en ce que** l'étape consistant à configurer le support de stockage de données informatiques (2) comprend la sous-étape consistant à rassembler des fragments de données initialement dispersés partout dans le support de stockage de données informatiques (2) pour obtenir la région de données de démarrage (20a) qui est en forme d'un bloc de données contiguës placé dans un segment de démarrage du support de stockage de données informatiques (2).

15. Unité de disque d'ordinateur (2) configurée par un procédé de gestion de mémoire selon l'une quelconque des revendications 1 à 14, comprenant une unité de disque système (20) qui est configurée pour comprendre une région de données de démarrage (20a) ayant une zone de description d'unité système (201) et une zone de données de démarrage (205) pour stocker des fichiers système, et au moins une unité de disque virtuelle (21) qui apparaît comme un nom de fichier dans ladite zone de description d'unité système (201) de ladite région de données de démarrage (20a) et à laquelle n'est pas allouée une quantité prédéterminée d'espace mémoire ;
ladite unité de disque système (20) étant en outre configurée pour comprendre un fichier tampon système (20d) pour stocker des parties modifiées par l'utilisateur des fichiers système résidant dans ladite zone de données de démarrage (205), et un fichier d'enregistrement de lecture/écriture (20c) pour enregistrer les adresses de parties des fichiers système dans ladite zone de données de démarrage (205) et correspondant aux parties modifiées par l'utilisateur stockées dans ledit fichier tampon système (20d), ledit fichier tampon système (20d) apparaissant comme un nom de fichier dans ladite zone de description d'unité système (201) de ladite région de données de démarrage (20a) et une quantité prédéterminée d'espace mémoire ne lui étant pas allouée.

16. Unité de disque d'ordinateur (2) selon la revendication 15, **caractérisée en outre en ce que** les parties modifiées par l'utilisateur sont stockées dans ledit fichier tampon système (20d) en tant qu'unités de stockage, ledit fichier d'enregistrement de lecture/écriture (20c) comprenant
une table de secteur (231) qui a une pluralité d'unités indicatrices de secteur (232) pour indiquer si un secteur physique correspondant du support de stockage de données informatiques (2) a été modifié, et
une table d'index (233) qui a une pluralité d'unités d'enregistrement d'adresses (234), dont chacune correspond à une des unités de stockage dans ledit fichier tampon système (20d) et stocke l'adresse de la partie des fichiers système dans ladite zone de données de démarrage (205) qui correspond à ladite une des unités de stockage dans ledit fichier tampon système (20d).

17. Unité de disque d'ordinateur (2) selon la revendication 15, **caractérisée en outre par** un espace de stockage libre (22) disponible pour utilisation par ladite unité de disque virtuelle (21) et ledit fichier tampon système (20d).

18. Unité de disque d'ordinateur (2) selon la revendication 15, **caractérisée en ce que** ladite unité de disque système (20) est en outre configurée pour comprendre un fichier de simulation de lecture/écriture (20b) pour permettre l'exécution d'une opération d'émulation d'écriture, où en cas d'écriture forcée dans ladite zone de description d'unité système (201), l'écriture est faite dans ledit fichier de simulation de lecture/écriture (20b) au lieu de ladite zone de description de l'unité système (201) pour maintenir l'intégrité des informations présentes dans ladite zone de description d'unité système (201).

19. Unité de disque d'ordinateur (2) selon la revendication 15, **caractérisée en ce que** ladite zone de données de démarrage (205) a une zone d'initialisation (206) pour stocker un système d'exploitation.

20. Unité de disque de données informatiques (2) selon la revendication 15, **caractérisée en ce que** ladite zone de description de l'unité système (201) a au moins un(e) d'une table de division (202), d'une table de description de fichier (203) et d'un répertoire racine (204) qui y est stocké(e).

21. Unité de disque d'ordinateur (2) selon la revendication 15, **caractérisée en ce que** ladite unité de disque virtuelle (21) est configurée pour comprendre une région de description d'unité virtuelle (21a), une zone de données protégées (21d) pour stocker des fichiers système, un fichier tampon d'unité virtuelle (21c) pour stocker des parties modifiées par l'utilisateur des fichiers système résidant dans ladite zone de données protégées (21d), et un fichier d'enregistrement de lecture/écriture (21e) pour enregistrer les adresses de parties des fichiers système dans ladite zone de données protégées (21 d) et correspondant aux parties modifiées par l'utilisateur stockées dans ledit fichier tampon d'unité virtuelle (21c), ledit fichier tampon d'unité virtuelle (21c) apparaissant comme un nom de fichier dans ladite région de description d'unité virtuelle (21a) et une quantité prédéterminée d'espace mémoire ne lui étant pas allouée.

22. Unité de disque d'ordinateur (2) selon la revendication 21, **caractérisée en outre par** un espace de stockage libre (22) disponible pour utilisation par ledit fichier tampon d'unité virtuelle (21c) et ledit fichier tampon système (20d).

23. Unité de disque d'ordinateur (2) selon la revendication 21, **caractérisée en outre en ce que** ladite unité de disque virtuelle (21) est configurée pour comprendre un fichier de simulation de lecture/écriture (21b) pour permettre l'exécution d'une opération d'émulation d'écriture, où en cas d'écriture forcée dans ladite région de description d'unité virtuelle (21a), l'écriture est faite dans ledit fichier de simulation de lecture/écriture (21b) au lieu de ladite région de description d'unité virtuelle (21a) pour maintenir l'intégrité des informations présentes dans ladite région de description d'unité virtuelle (21a).

24. Unité de disque d'ordinateur (2) selon la revendication 21, **caractérisée en outre en ce que** ladite zone de données protégées (21d) a une zone d'initialisation d'unité virtuelle (210) pour stocker un système d'exploitation.

25. Unité de disque d'ordinateur (2) selon la revendication 21, **caractérisée en outre en ce que** ladite région de description d'unité virtuelle (21a) a au moins un(e) d'une table de partition (211), d'une table de description de fichier (212) et d'un répertoire racine (213) qui est stocké(e).
